# EUROPEAN PATENT APPLICATION

(11) **EP 4 663 370 A1**
(43) Date of publication of application: **17.12.2025**
(21) Application number: 24752848.2
(22) Date of filing: 05.02.2024
(51) Int. Cl.: B28D 5/04

(54) **WIRE CUTTING MACHINE**

(30) Priority: 09.02.2023 CN 202320200065 U; 09.02.2023 CN 202310106831; 09.02.2023 CN 202320200610 U; 09.02.2023 CN 202320193339 U; 09.02.2023 CN 202320193287 U
(71) Applicant: Qingdao Gaoce Technology Co., Ltd, Qingdao, Shandong 266114 (CN)
(72) Inventor: GONG, Yunqing, Qingdao, Shandong 266114 (CN); GAO, Tao, Qingdao, Shandong 266114 (CN); SUN, Qitong, Qingdao, Shandong 266114 (CN); CHEN, Chao, Qingdao, Shandong 266114 (CN); CUI, Chenchen, Qingdao, Shandong 266114 (CN); ZHANG, Weixiao, Qingdao, Shandong 266114 (CN); JIN, Qi, Qingdao, Shandong 266114 (CN); LI, Yuhui, Qingdao, Shandong 266114 (CN); YANG, Yong, Qingdao, Shandong 266114 (CN); LIU, Pengfei, Qingdao, Shandong 266114 (CN); SUN, Chengzheng, Qingdao, Shandong 266114 (CN); ZHAO, Ruiguang, Qingdao, Shandong 266114 (CN); CHEN, Yu, Qingdao, Shandong 266114 (CN)
(74) Representative: Patentanwälte Olbricht Buchhold Keulertz
(86) International application number: PCT/CN2024/075977
(87) International publication number: WO 2024/164993

(57) **Abstract**

A wire cutting machine, aiming to solve the problem of existing wire cutting machines failing to protect steering assemblies well or ensure stable operation of the steering assemblies. For this purpose, the wire cutting machine comprises a cutting chamber (1), a protective chamber (3), a cutting mechanism (11), and a wiring mechanism (20). The protective chamber (3) is arranged in the cutting chamber (1). The cutting mechanism (11) is arranged in the cutting chamber (1). The wiring mechanism (20) comprises a steering assembly (23). The steering assembly (23) is configured to enable a cutting wire (25) to be wound on the cutting mechanism (11) after steering, so that the cutting mechanism (11) can perform cutting by means of the cutting wire (25). The steering assembly (23) is arranged in the protective chamber (3). Compared with the prior art in which the steering assembly (23) is directly arranged in the cutting chamber (1), the steering assembly (23) being directly arranged in the protective chamber (3) can protect the steering assembly (23) as much as possible from being affected by cutting fluid and silicon powder, thereby ensuring the operational stability of the steering assembly (23).

## Description

### CROSS-REFERENCE TO RELATED APPLICATIONS

The present application claims priority from the following Chinese patent applications: Chinese patent application No. CN202310106831.6 and entitled "WIRE CUTTING MACHINE", which was filed on February 9, 2023; Chinese patent application No. CN202320193339.2 and entitled "WIRE CUTTING MACHINE", which was filed on February 9, 2023; Chinese patent application No. CN202320193287.9 and entitled "WIRE PASSING BRACKET, STEERING ASSEMBLY AND WIRE CUTTING MACHINE", which was filed on February 9, 2023; Chinese patent application No. CN202320200065.5 and entitled "GUIDE WHEEL ASSEMBLY, WIRE SAW UNIT AND WIRE CUTTING MACHINE", which was filed on February 9, 2023; and Chinese patent application No. CN202320200610.0 and entitled "STEERING WHEEL ASSEMBLY, WIRE SAW UNIT AND WIRE CUTTING MACHINE", which was filed on February 9, 2023; the entire disclosures of these Chinese patent applications are incorporated herein by reference.

### FIELD OF THE INVENTION

The present disclosure relates to the technical field of wire cutting apparatuses, and specifically provides a wire cutting machine.

### BACKGROUND OF THE INVENTION

A wire cutting machine is an apparatus that cuts materials to be cut (such as silicon rods, semiconductors, silicon carbide, sapphire, magnetic materials, etc.) through high-speed reciprocating motion of a cutting wire. The slicing process is achieved through a slicer, and a cutting liquid needs to be sprayed into a cutting area of the slicer. The powder (such as silicon powder) generated after the cutting work is also suspended in the cutting area and mixed into the cutting liquid. The sprayed cutting liquid will flow onto a routing mechanism along the cutting wire. After leaving a cutting mechanism, the cutting wire first passes through a steering assembly by winding. Therefore, the cutting liquid and the silicon powder mixed into the cutting liquid will affect the normal operation of a steering wheel, and even cause damage to the steering wheel. The slicer is only one type of the wire cutting machine, and other wire cutting machines such as square cutters also have the above-mentioned problem.

Accordingly, there is a need for a new wire cutting machine in the art to solve the problem that existing wire cutting machines cannot protect the steering assembly very well or the steering assembly cannot work stably.

### SUMMARY OF THE INVENTION

The present disclosure aims to solve the above technical problem, namely, to solve the problem that existing wire cutting machines cannot protect the steering assembly very well or the steering assembly cannot work stably.

In a first aspect, the present disclosure provides a wire cutting machine, which includes a cutting chamber, a protective chamber, a cutting mechanism, and a routing mechanism; the routing mechanism includes a steering assembly, which is configured to enable a cutting wire to be wound around the cutting mechanism after steering, so that the cutting mechanism can perform cutting work through the cutting wire; the protective chamber is arranged inside the cutting chamber, and the cutting mechanism is arranged inside the cutting chamber; the steering assembly is arranged inside the protective chamber.

By arranging the steering assembly inside the protective chamber, compared to the prior art in which the steering assembly is directly arranged inside the cutting chamber, the influence of the cutting liquid on the steering assembly arranged inside the protective chamber is greatly reduced. Therefore, the operational stability of the steering assembly is increased; meanwhile, the cutting chamber can also reduce the entry of silicon powder, reducing the damage to the cutting wire inside the steering assembly caused by the silicon powder. As a result, the service life of the steering assembly and the cutting wire is extended.

### BRIEF DESCRIPTION OF THE DRAWINGS

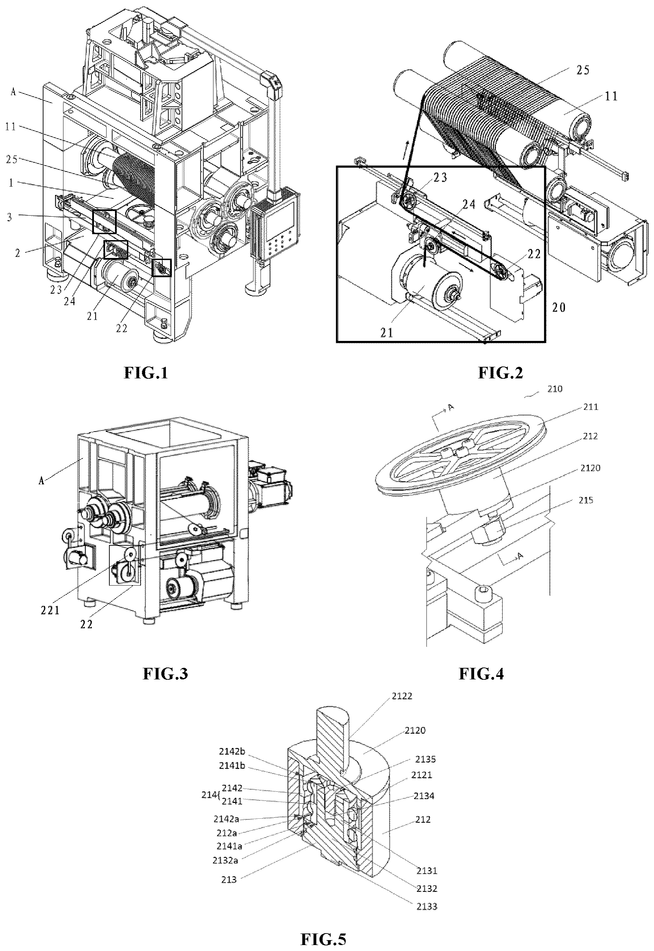

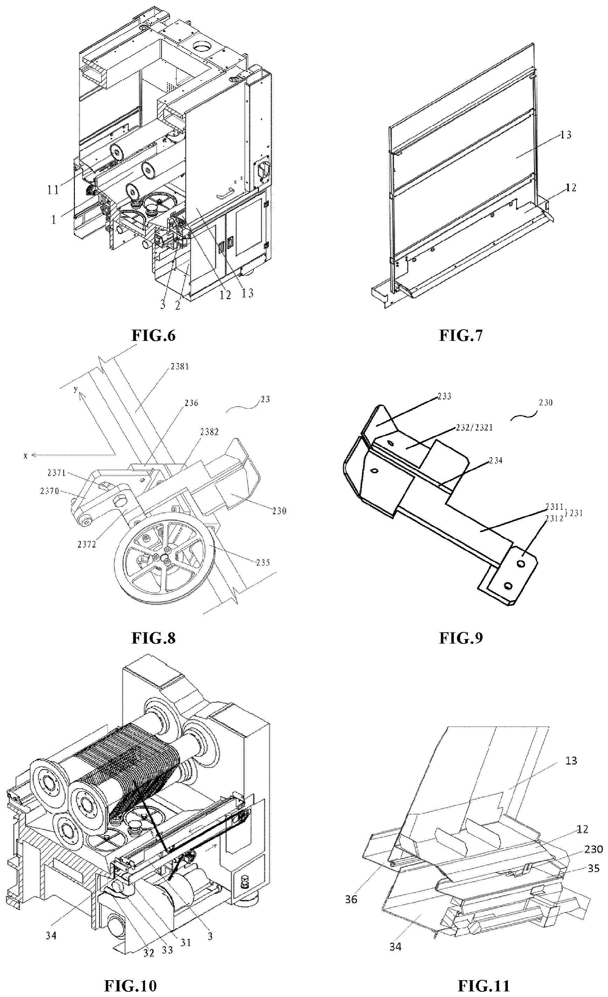

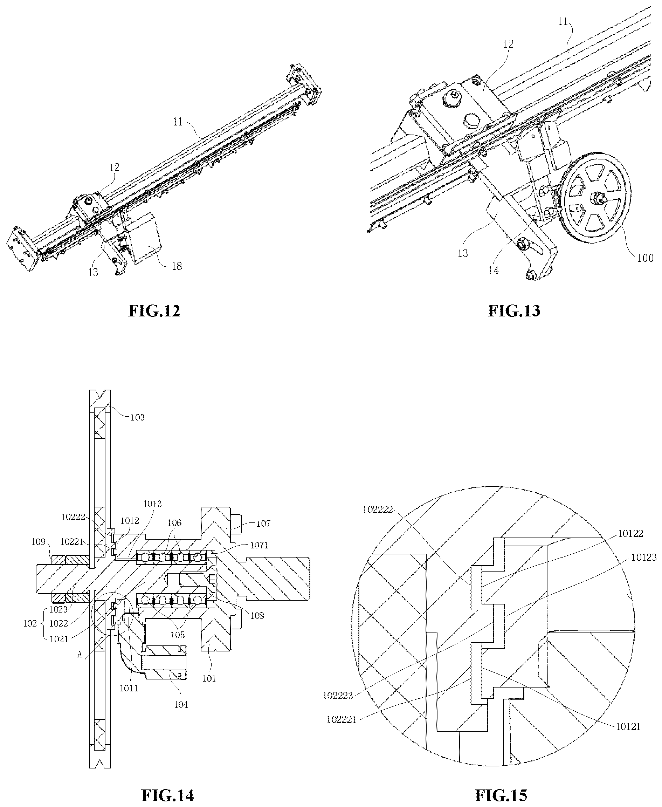

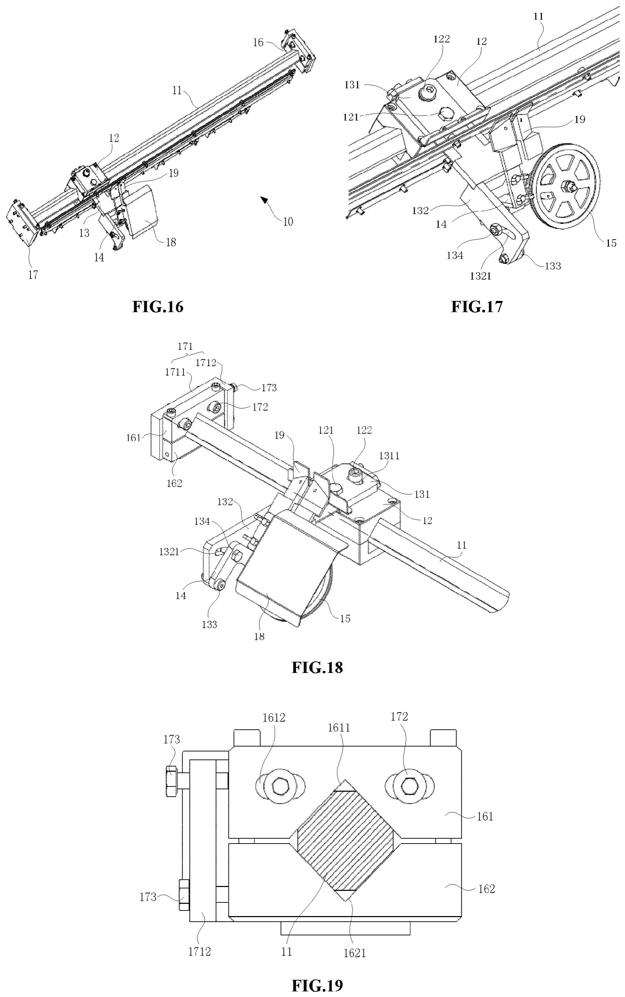

FIG. 1 is a schematic view of a main frame and its internal structure of a slicer in a first embodiment of the present disclosure; FIG. 2 is a schematic view showing a working process of a cutting wire of the slicer in the first embodiment of the present disclosure; FIG. 3 is a view showing an arrangement position of a tension assembly of the existing slicer; FIG. 4 is a schematic view of a routing wheel set of the slicer in the first embodiment of the present disclosure; FIG. 5 is a cross-sectional view taken along line A-A in FIG. 4; FIG. 6 is a view showing arrangement positions of an isolation door and a shielding plate of the slicer on the slicer in the first embodiment of the present disclosure; FIG. 7 is a schematic view showing the connection between the isolation door and the shielding plate of the slicer in the first embodiment of the present disclosure; FIG. 8 is a schematic structural view of a steering assembly of the slicer in the first embodiment of the present disclosure; FIG. 9 is a schematic structural view of a wire passing bracket of the slicer in the first embodiment of the present disclosure; FIG. 10 shows a gas-liquid inlet of the slicer in the first embodiment of the present disclosure; FIG. 11 is a cross-sectional view of a protective chamber of the slicer of the present disclosure; FIG. 12 is an assembly view of a steering wheel in a second embodiment of the present disclosure; FIG. 13 is a partially enlarged view of the steering wheel in the second embodiment of the present disclosure; FIG. 14 is a cross-sectional view of the steering wheel in the second embodiment of the present disclosure; FIG. 15 is a partially enlarged view at position A in FIG. 14; FIG. 16 is an assembly view of a steering assembly in a third embodiment of the present disclosure; FIG. 17 is a partially enlarged view of the steering assembly in the third embodiment of the present disclosure; FIG. 18 is a partially enlarged view of the steering assembly in the third embodiment of the present disclosure from another angle; and FIG. 19 is a side view of the steering assembly in the third embodiment of the present disclosure.

### DETAILED DESCRIPTION OF THE EMBODIMENT(S) OF THE INVENTION

Preferred embodiments of the present disclosure will be described below with reference to the accompanying drawings and in connection with a slicer. It should be understood by those skilled in the art that these embodiments are only used to explain the technical principles of the present disclosure, and are not intended to limit the scope of protection of the present disclosure. Those skilled in the art can adjust them as needed to adapt to specific application scenarios. For example, although a slicer is used as an example for description in the specification, the present disclosure can also be applied to other types of wire cutting machines, such as square cutters. These common wire cutting machines are all within the scope of protection of the present disclosure.

It should be noted that in the description of the present disclosure, directional or positional relationships indicated by terms such as "upper", "lower", "inner" and "outer" are based on the directional or positional relationships shown in the drawings. They are merely used for the ease of description, and do not indicate or imply that the device or element involved must have a specific orientation, or be configured or operated in a specific orientation, and therefore they should not be construed as limiting the present disclosure. In addition, terms "first" and "second" are used for descriptive purpose only, and should not be construed as indicating or implying relative importance.

In addition, it should also be noted that in the description of the present disclosure, unless otherwise clearly specified and defined, terms "install" and "connect" should be understood in a broad sense; for example, the connection may be a fixed connection, or a detachable connection, or an integral connection; it may be a mechanical connection, or an electrical connection. For those skilled in the art, the specific meaning of the above terms in the present disclosure can be understood according to specific situations.

Before describing the present application below, firstly, it should be noted that features with the same name may be labeled differently in the corresponding figures among the following different embodiments, but this is not unclear. On the contrary, in the following different embodiments of the present application, features with the same name are only labeled differently in the accompanying drawings, but the structures indicated by the feature name and their corresponding meanings are the same. For example, although the steering assembly is labeled 23 in the figures corresponding to the first embodiment (such as FIGS. 1-2 and 8) and labeled 10 in the figures corresponding to the third embodiment (such as FIG. 16), the meaning of the steering assembly is the same in the two embodiments. For another example, although the steering wheel is labeled 235 in the figures corresponding to the first embodiment (such as FIG. 8), labeled 100 in the figures corresponding to the second embodiment (such as FIG. 13), and labeled 15 in the figures corresponding to the third embodiment (such as FIGS. 17-18), the meaning of the steering wheel is the same in the three embodiments. For another example, although the wire passing bracket is labeled 230 in the figures corresponding to the first embodiment (such as FIGS. 8-9 and 11) and labeled 19 in the figures corresponding to the third embodiment (such as FIGS. 16-18), the meaning of the wire passing bracket is the same in the two embodiments. For another example, although the slide rail and slider are labeled 2381 and 2382 respectively in the figures corresponding to the first embodiment (such as FIG. 8) and labeled 11 and 12 respectively in the figures corresponding to the second and third embodiments (such as FIGS. 12-13 and 16-18), the meanings of the slide rail and slider are the same in these embodiments. For another example, although the installation seat is labeled 2372 in the figures corresponding to the first embodiment (such as FIG. 8) and labeled 14 in the figures corresponding to the second and third embodiments (such as FIGS. 13 and 16-18), the meaning of the installation seat is the same in these embodiments.

Of course, the above examples only list some cases. Due to limitations of the length of this document, it is not possible to herein list all the cases with different labels in an exhaustive way. As for the cases not listed, those skilled in the art should understand them according to the meaning explained above, and should not interpret them as unclear description.

As shown in FIGS. 1 and 2, the slicer includes a main frame A, inside which a cutting chamber 1, a winding/unwinding chamber 2, a protective chamber 3, a cutting mechanism 11 and a routing mechanism 20 are arranged. The protective chamber 3 is arranged inside the cutting chamber 1, and the cutting mechanism 11 is also arranged inside the cutting chamber 1. The routing mechanism 20 includes a winding/unwinding assembly (hereinafter, the winding/unwinding assembly will be described by using an unwinding roller 21 as an example), a guide assembly 24, a tension assembly 22, and a steering assembly 23 arranged inside the protective chamber 3. Both the unwinding roller 21 and the tension assembly 22 are arranged inside the winding/unwinding chamber 2. A cutting wire 25 released by the unwinding roller 21 is guided onto the tension assembly 22 through the guide assembly 24, then enters the protective chamber 3 through the tension assembly 22 and is guided onto the steering assembly 23; then, it penetrates out of the protective chamber 3 and enters the cutting chamber 1 to connect with the cutting mechanism 11, so that the cutting mechanism 11 can perform cutting work through the cutting wire 25.

The slicer is mainly used for cutting and processing hard and brittle materials such as crystalline silicon. This process is mainly achieved through repeated cutting of the cutting wire 25. The slicer of the present disclosure includes the main frame A, and chambers are arranged inside the main frame A, including the cutting chamber 1, the winding/unwinding chamber 2, and the protective chamber 3. The routing mechanism 20 is arranged inside the winding/unwinding chamber 2, and the routing mechanism 20 includes the unwinding roller 21. The unwinding roller 21 is used to wind and unwind the cutting wire 25. The movement process of the cutting wire 25 on the slicer is shown in FIG. 2. When cutting crystalline silicon, the unwinding roller 21 first unwinds the cutting wire 25, and then the cutting wire 25 is guided by the guide assembly 24 onto the tension assembly 22. The tension assembly 22 tightens the cutting wire 25 to give it a stable tension value, thereby ensuring that the wire network described below is always in the optimal tensioning state. After being tightened by the tension assembly 22, the cutting wire 25 moves toward the steering assembly 23 in the protective chamber 3. The steering assembly 23 adjusts the cutting wire 25 according to the direction and angle required for the cutting wire 25 to guide the cutting wire 25 into the cutting chamber 1, so that the cutting wire 25 is wound around the cutting mechanism 11 at suitable positions to form a wire network. After the wire network is formed, the cutting wire 25 passes out of the other end of the cutting chamber 1, passes through the steering assembly 23 at the other end of the cutting chamber 1 (herein, a wire outgoing end of the cutting wire 25), and returns to the unwinding roller 21 (herein, the unwinding roller 21 is used to wind the wire) after passing through the tension assembly 22 and the guide assembly 24. In addition, the steering assembly 23, the tension assembly 22 and the guide assembly 24 at the other end of the cutting chamber 1 (herein, the wire outgoing end of the cutting wire 25) have the same principles as the steering assembly 23, the tension assembly 22 and the guide assembly 24 introduced in the wire incoming end of the cutting chamber 1 when functioning. When cutting crystalline silicon, the cutting wire 25 is unwound by the unwinding roller 21 at a first end, and wound by the unwinding roller 21 at a second end, so that the cutting wire 25 moves in one direction. Afterwards, the cutting wire 25 is unwound by the unwinding roller 21 at the second end, and wound by the unwinding roller 21 at the first end, so that the cutting wire 25 moves in the opposite direction. The reciprocating motion of the cutting wire 25 on the cutting mechanism 11 can be achieved by the winding and unwinding operations of the unwinding roller 21, and the wire network formed by the cutting wire 25 can achieve cutting of crystalline silicon through the reciprocating motion.

As shown in FIG. 3, in the routing mechanism 20 of the slicer in the prior art, the unwinding roller 21 is arranged inside the main frame A, and the tension assembly 22 is arranged outside the main frame A. This makes it very inconvenient for workers to assemble the cutting wire 25, requiring them to pass the wire into and out of the main frame A repeatedly, which increases workload and working time. The present disclosure changes the overall structural layout by arranging the entire routing mechanism 20 inside the main frame A. As shown in FIG. 1, the unwinding roller 21, the guide assembly 24, the tension assembly 22, and the steering assembly 23 are all arranged inside the main frame A, avoiding the inconvenience caused by passing the wire and improving work efficiency.

In addition, in the prior art, the steering assembly is arranged inside the cutting chamber 1. When a cutting liquid is sprayed into the cutting chamber 1, the cutting liquid is prone to flowing onto the steering assembly 23 along the cutting wire 25. At the same time, a portion of the cutting liquid will be directly sprayed onto the steering assembly 23, which is very unfavorable for the stability of the steering assembly 23. In addition, due to the presence of some powder such as silicon powder in the cutting chamber 1, damage will be caused to the steering assembly 23 and the cutting wire 25 on it. In the present disclosure, the steering assembly 23 is arranged inside the protective chamber 3, preventing the majority of cutting liquid from being directly sprayed onto the steering assembly 23, while also reducing the influence of silicon powder on the steering assembly 23 and the cutting wire 25 on it. Since the steering assembly 23 is arranged inside the protective chamber 3 and it needs to receive the cutting wire 25 guided by the tension assembly 22, wire passing holes (not shown in the figure) are provided on the protective chamber 3.

During the use of the slicer, the cutting wire 25 needs to be guided by the guide assembly 24, the tension assembly 22 and the steering assembly 23, etc., (the positions of these assemblies in the slicer are shown in FIG. 1, and the guiding process is shown in FIG. 2). The guide assembly 24, the tension assembly 22 and the steering assembly 23 all include a routing wheel set 210, which includes a housing 212, a rotating shaft 213, and a rotating wheel. The rotating wheel in the guide assembly 24 is a wiring wheel 211, the rotating wheel in the tension assembly 22 is a tension wheel 221, and the rotating wheel in the steering assembly 23 is a steering wheel 235, as shown in FIG. 4. Since the rotating wheel can be any one of the wiring wheel 211, the tension wheel 221 and the steering wheel 235, the wiring wheel 211 will be used below as an example for description. As shown in FIG. 4 and 5, the housing 212 of the routing wheel set 210 is fixedly arranged, and the rotating shaft 213 is rotatably arranged inside the housing 212. The wiring wheel 211 is fixedly arranged at an end of the rotating shaft 213, and a bearing 214 is also arranged between the rotating shaft 213 and the housing 212. At this time, the bearing 214 is sleeved on the rotating shaft 213, and it specifically includes a bearing installation part 2131, a middle rotating part 2132, and a rotating wheel installation part 2133 connected in sequence. At this time, the wiring wheel 211 is fixedly arranged on the rotating wheel installation part 2133, the bearing 214 is sleeved on the bearing installation part 2131, and the housing 212 is sleeved on the bearing 214. The bearing 214 includes an inner ring 2141 and an outer ring 2142. The end of the rotating shaft 213 that is away from the wiring wheel 211 is also provided with an installation hole 2134, and the end of the rotating shaft 213 that is away from the wiring wheel 211 is also provided with a shaft end baffle 2135 which is connected to the installation hole 2134 through a threaded connector. A first end face 2132a is provided on the rotating shaft 213. A first side 2141a of the inner ring 2141 of the bearing 214 abuts against the first end face 2132a, and a second side 2141b of the inner ring 2141 of the bearing 214 abuts against the shaft end baffle 2135. The shaft end baffle 2135 cooperates with the first end face 2132a to press against two ends of the inner ring 2141 of the bearing 214 to fix the inner ring 2141 of the bearing 214 to the rotating shaft 213. The inner side of the housing 212 is also provided with a second end face 212a, and a first side 2142a of the outer ring 2142 of the bearing 214 abuts against the second end face 212a. The end of the housing 212 is also provided with an end cover 2120, and a protruding circular ring 2121 is provided on the end cover 2120. The protruding circular ring 2121 is inserted into the inner side of the housing 212 and abuts against a second side 2142b of the outer ring 2142 of the bearing 214. The second end face 212a of the housing 212 cooperates with the protruding circular ring 2121 to press against two ends of the outer ring 2142 of the bearing 214 so that it can be fixed inside the housing 212. In addition, an installation rod 2122 is also provided on the side of the end cover 2120 that is away from the protruding circular ring 2121. The installation rod 2122 is provided with threads (not shown in the figure). After the installation rod 2122 passes through the corresponding installation hole on the slicer, a nut 215 is screwed onto the installation rod 2122 to fix the housing 212 of the routing wheel assembly 210 to the corresponding position on the slicer.

In the above structure, the rotating shaft 213 is fixedly connected to the wiring wheel 211 to ensure that the wiring wheel 211 rotates coaxially with the rotating shaft 213 when the rotating shaft 213 rotates. The rotating shaft 213 is arranged inside the housing 212, and the bearing 214 is provided between the housing 212 and the rotating shaft 213. The bearing 214 is sleeved on the rotating shaft 213 to support the rotating shaft 213 and reduce the friction coefficient of the rotating shaft 213 during operation. The inner ring 2141 of the bearing 214 is in contact with the rotating shaft 213, and the outer ring 2142 of the bearing 214 is in contact with the housing 212. One side of the rotating shaft 213 is connected to the inner ring 2141 of the bearing 214 so that the rotating shaft 213 and the inner ring 2141 of the bearing 214 rotate synchronously. The other side of the rotating shaft 213 is fixed to the wiring wheel 211 so that the wiring wheel 211 is driven to rotate together when the rotating shaft 213 rotates. At this time, the rotating shaft 213, the wiring wheel 211 and the inner ring 2141 of the bearing 214 rotate simultaneously and coaxially. The outer ring 2142 of the bearing 214 is fixed to the housing 212 to support the rotating shaft 213 and the inner ring 2141 of the bearing 214 while reducing the friction coefficient during rotation. Compared to the solution in which the rotating shaft 213 is fixed and the rotation of the housing 212 and the outer ring 2142 of the bearing 214 is used to drive the wiring wheel 211 to rotate in the prior art, in the present disclosure, the rotation of the rotating shaft 213 drives the wiring wheel 211 to rotate instead of through the housing 212, thus reducing the radius of rotation. By using the rotation of the rotating shaft 213 and the inner ring 2141 of the bearing 214 to drive the wiring wheel 211 to rotate, the rotational inertia of the routing wheel set 210 can be reduced, and its operational resistance can be reduced, thereby improving the working efficiency of the routing wheel set 210.

The end of the rotating shaft 213 that is away from the wiring wheel 211 is also provided with the installation hole 2134 and the shaft end baffle 2135. The shaft end baffle 2135 is connected to the installation hole 2134 through a threaded connector, and the second side 2141b of the inner ring 2141 of the bearing 214 abuts against the shaft end baffle 2135, so that the inner ring 2141 of the bearing 214 is fixedly connected to the rotating shaft 213, enabling the rotating shaft 213 and the inner ring 2141 of the bearing 214 to rotate synchronously. The end of the housing 212 is also provided with the end cap 2120, on which the protruding circular ring 2121 is provided. The protruding circular ring 2121 is inserted into the inner side of the housing 212 and abuts against the second side 2142b of the outer ring 2142 of the bearing 214 to fix the outer ring 2142 of the bearing 214 inside the housing 212. After the above connection is completed, the rotating shaft 213 and the inner ring 2141 of the bearing 214 rotate synchronously inside the housing 212. At the same time, the rotating shaft 213 drives the wiring wheel 211 to rotate. The housing 212 is fixedly connected to the outer ring 2142 of the bearing 214 to support and protect the rotating shaft 213 and the inner ring 2141 of the bearing 214. The side of the end cover 2120 that is away from the protruding circular ring 2121 is further provided with the installation rod 2122, which is used for installing the routing wheel set 210 on the slicer.

During the movement of the cutting wire 25, it first passes through the above-mentioned guide assembly 24, and then passes through the tension assembly 22. After being stretched to the optimal tensioning state by the tension assembly, it is transmitted to the steering assembly 23. As shown in FIGS. 8 and 9, the steering assembly 23 includes a fixing bracket 236, the steering wheel 235, and a wire passing bracket 230. The wire passing bracket 230 is fixedly arranged on the fixing bracket 236, and the fixing bracket 236 is slidably arranged on the slicer. The steering wheel 235 is rotatably arranged on the fixing bracket 236. As shown in FIG. 9, the wire passing bracket 230 includes a fixing part 231 and a bearing part 232 that are connected to each other. The side of the bearing part 232 that is away from the fixing part 231 is further provided with a stopper part 233. A wire passing groove 234 passes through the fixing part 231, the bearing part 232, and the stopper part 233. The fixing part 231 includes a fixing main frame 2311 and a bent fixing edge 2312. The fixing main frame 2311 is in the form of an L-shaped plate, and the bent fixing edge 2312 is arranged at an end of the fixing main frame 2311. The fixing main frame 2311 and the bent fixing edge 2312 can be welded, screwed, or integrally formed. The bearing part 232 includes guide inclined surfaces 2321, which are arranged on two sides of the wire passing groove 234. It should be noted that the fixing main frame 2311, the bent fixing edge 2312, and the bearing part 232 of the present disclosure are integrally formed. Of course, they can also be set as split types according to the needs of those skilled in the art, all of which are within the scope of protection of the present disclosure. As shown in FIG. 8, the steering assembly 23 also includes a slide rail 2381 and a slider 2382. The slide rail 2381 is fixedly arranged on the slicer, the slider 2382 is slidably arranged on the slide rail 2381, and the fixing bracket 236 is fixedly arranged on the slider 2382. When the steering assembly 23 also includes a height adjustment block 2370, the height adjustment block 2370 can be slidably arranged on the fixing bracket 236, and a sliding direction of the height adjustment block 2370 is perpendicular to a sliding direction of the fixing bracket 236 (i.e., the x-direction shown in FIG. 8). At this time, the steering wheel 235 is not directly arranged on the fixing bracket 236, but is rotatably arranged on the height adjustment block 2370, and the wire passing bracket 230 is also fixedly arranged on the height adjustment block 2370. When the steering assembly 23 also includes an installation seat 2372, the installation seat 2372 is arranged on the height adjustment block 2370, and the installation seat 2372 can adjust the angle of the fixing bracket 236 and the steering wheel 235 to a certain extent according to the needs of the cutting wire 23. The installation seat 2372 can be fixed at the adjusted angle position. At this time, the steering wheel 235 is rotatably arranged on the installation seat 2372, and the wire passing bracket 230 is also fixedly arranged on the installation seat 2372 together. Preferably, the slide rail 2381 is configured as a dual-rod slide rail 2381 to enhance the stability of the movement of the slider 2382. In addition, in a case where the steering assembly 23 includes the wire passing bracket 230, an isolation door 13 is provided between the cutting chamber 1 and the outer side, and the protective chamber 3 is provided on the inner side of the isolation door 13. As shown in FIGS. 6 and 7, a shielding edge 12 is provided on the inner side of the isolation door 13, and it forms a top cover of the protective chamber 3. The shielding edge 12 can be overlapped on the bearing part 232 of the wire passing bracket 230, and the steering wheel 235 is arranged in the protective chamber 3 at a position near the isolation door 13. In addition, as shown in FIG. 11, the protective chamber 3 also includes a side water blocking plate 36 and a steering wheel waterproof assembly 35. The bottom of the protective chamber 3 is a water blocking tray 34, and the side edge of the protective chamber 3 is the side water blocking plate 36. The isolation door 13 is arranged on an upper side of the side water blocking plate 36, and a lower side of the shielding edge 12 arranged on the inner side of the isolation door 13 is further provided with the steering wheel waterproof assembly 35. The wire passing bracket 230 is arranged between the shielding edge 12 and the steering wheel waterproof assembly 35, and the wire passing bracket 230 extends from the inner side of the protective chamber 3 to the outer side of the protective chamber 3. The above arrangement enables the isolation door 13, the shielding edge 12, the steering wheel waterproof assembly 35, the water blocking tray 34 and the side water blocking plate 36 to jointly enclose the protective chamber 3.

Since the steering assembly 23 can guide the cutting wire 25 into the cutting chamber 1, it has to include a structure that can adjust its direction. The steering assembly 23 includes the slide rail 2381 and the slider 2382. The slider 2382 can slide in a length direction of the slide rail 2381 (i.e., the y-direction shown in FIG. 8). The fixing bracket 236 of the steering assembly 23 is arranged on the slider 2382, and the steering wheel 235 is rotatably arranged on the fixing bracket 236, which can ensure that the steering wheel 235 can rotate while also moving in the length direction of the slide rail 2381, i.e., the y-direction shown in FIG. 8. Therefore, the position of the steering wheel 235 can be adjusted according to the requirement of the position at which the cutting wire 25 enters the cutting chamber 1. In order to ensure the accuracy of the position at which the cutting wire 25 enters the cutting chamber 1, the wire passing bracket 230 is also provided on the fixing bracket 236. At this time, the cutting wire 25 passing through the steering wheel 235 can enter the cutting chamber 1 only under the guidance of the wire passing bracket 230. The cutting wire 25 passes through the wire passing groove 234 on the wire passing bracket 230. Since the wire passing groove 234 is a fixed structure, the angle at which the cutting wire 25 enters the wire passing groove 234 of the wire passing bracket 230 from the steering wheel 235 is fixed. Therefore, the relative position between the wire passing bracket 230 and the steering wheel 235 arranged on the fixing bracket 236 is fixed.

The bent fixing edge 2312 of the fixing part 231 of the wire passing bracket 230 is installed on the fixing bracket 236. One end of the fixing main frame 2311 is connected to the bent fixing edge 2312, and the other end of the fixing main frame 2311 is connected to the bearing part 232 to ensure that the fixing main frame 2311 can be fixed on the fixing bracket 236 while also supporting the bearing part 232. The stopper part 233 is connected to the other end of the bearing part 232. After passing through the steering wheel 235, the cutting wire 25 passes through the wire passing groove 234 of the fixing main frame 2311, the bearing part 232 and the stopper part 233, and then is wound around the cutting mechanism 11. As shown in FIG. 9, setting the fixing main frame 2311 in an L shape can make it leave a rotation space for the steering wheel 235 to prevent it from hindering the rotation of the steering wheel 235. In order to adjust the direction of the wire passing bracket 230 and the steering wheel 235 more accurately, the wire passing bracket 230 and the steering wheel 235 are connected together to the installation seat 2372, and the installation seat 2372 is installed on the height adjustment block 2370. At the same time, the height adjustment block 2370 is installed on the fixing bracket 236. The installation seat 2372 is installed on the height adjustment block 2370 through a bolt and an arc-shaped hole 2371 that matches the bolt (as shown in FIG. 8). One end of the installation seat 2372 is fixed, and the other end is adjusted in the arc of the arc-shaped hole 2371 for angle adjustment. After adjustment, the installation seat 2372 is tightened and fixed by the bolt at the arc-shaped hole 2371 to achieve angle adjustment of the wire passing bracket 230 and the steering wheel 235, so that the cutting wire 25 can be connected to the cutting mechanism 11 at a suitable angle, and the height adjustment block 2370 can drive the installation seat 2372 to move in the x-direction through the cooperation of the bolt and the through hole. After the position in the x-direction is adjusted by the height adjustment block 2370, the installation seat 2372 is adjusted to the appropriate angle so that the wire passing bracket 230 and the steering wheel 235 are eventually connected to the cutting mechanism 11 at the appropriate position and angle.

In addition, since the protective chamber 3 is arranged inside the cutting chamber 1 and the cutting wire 25 can enter the cutting chamber 1 through the protective chamber 3, in order to reduce the entry of cutting liquid from the cutting chamber 1 into the protective chamber 3, a shielding edge 12 is provided on the isolation door 13. The shielding edge 12 is arranged inside the cutting chamber 1. If the shielding edge 12 is provided in a case where there is no wire passing bracket 230, the shielding edge 12 will hinder the cutting wire 25 from entering the cutting chamber 1, and the cutting wire 25 will also cut the shielding edge 12. In the present disclosure, the wire passing bracket 230 is provided, which avoids the above problem. Due to the wire passing groove 234 provided on the wire passing bracket 230, the cutting wire 25 will move along the wire passing groove 234 and will not cut the shielding edge 12. In addition, the shielding edge 12 is overlapped on the bearing part 232 of the wire passing bracket 230, which can block the spraying of cutting liquid from the cutting chamber 1. The bearing part 232 includes guide inclined surfaces 2321, which are inclined surfaces for facilitating the liquid to flow downward. The arrangement of the guide inclined surfaces 2321 facilitates the cutting liquid sprayed onto the bracket to flow downward along the inclined surfaces to the bottom of the cutting chamber 1. The wire passing bracket 230 is also provided with the stopper part 233. At this time, the stopper part 233 can not only cooperate with the shielding edge 12 to further reduce the possibility of cutting liquid entering the protective chamber 3, but also prevent excessive shielding of the shielding edge 12, which would otherwise affect the operation of the cutting wire 25, causing the shielding edge 12 to be cut open by the cutting wire 25. In addition, the stopper part 233 is detachably connected to the bearing part 232, and the size and shape of the stopper part 233 can be selected as required. The stopper part 233 can be replaced at any time, while also reducing the cost.

Since the cutting chamber 1 of the slicer also has to discharge liquid (namely, the cutting liquid mentioned above) and powder or dust (the powder is mainly silicon powder at this time), it is necessary to provide a drainage and exhaust unit inside the slicer, that is, the protective chamber 3 and the cutting chamber 1 are communicated with exhaust and drainage channels. As shown in FIG. 10, the drainage and exhaust unit includes a main exhaust pipeline (not shown in the figure), a main drainage pipeline (not shown in the figure), an auxiliary exhaust pipeline 33, and an auxiliary drainage pipeline 32. A first end of the main exhaust pipeline is communicated with the cutting chamber 1, and a second end of the main exhaust pipeline is communicated with the outside. Preferably, the second end of the main exhaust pipeline is communicated with a vacuum pump. A first end of the main drainage pipeline is communicated with the cutting chamber 1, and a second end of the main drainage pipeline is communicated with the outside. Preferably, the second end of the main drainage pipeline is communicated with a liquid supply cylinder. A first end of the auxiliary exhaust pipeline 33 is communicated with the protective chamber 3, and a second end of the auxiliary exhaust pipeline 33 is communicated with the main exhaust pipeline. A first end of the auxiliary drainage pipeline 32 is communicated with the protective chamber 3, and a second end of the auxiliary drainage pipeline 32 is communicated with the main drainage pipeline. (The connection between the main exhaust pipeline, the main drainage pipeline, and the cutting chamber 1 mentioned above is not shown in the figure, and the connections between the main drainage pipeline and the auxiliary drainage pipeline 32, as well as between the main exhaust pipeline the and the auxiliary exhaust pipeline 33, are also not shown in the figure). The protective chamber 3 is provided therein with a gas-liquid inlet 31, and the first end of the auxiliary exhaust pipeline 33 is communicated with the first end of the auxiliary drainage pipeline 32 and then communicated with the protective chamber 3, so that the first end of the auxiliary exhaust pipeline 33 and the first end of the auxiliary drainage pipeline 32 share the same gas-liquid inlet 31. Preferably, the auxiliary drainage pipeline 32 is located below the auxiliary exhaust pipeline 33, and the diameter of the auxiliary exhaust pipeline 33 can also be set to be larger than that of the auxiliary drainage pipeline 32. In addition, the position of the main exhaust pipeline can be set to be higher than that of the auxiliary exhaust pipeline 33, and the position of the main drainage pipeline can be set to be lower than that of the auxiliary drainage pipeline 32. In order to better discharge liquid and gas to the outside of the protective chamber 3, the gas-liquid inlet 31 is set at the lowest point of the protective chamber 3. Since the bottom of the protective chamber 3 is the water blocking tray 34, the gas-liquid inlet 31 is set on the water blocking tray 34.

According to the slicing process of the slicer mentioned above, it can be seen that a wire network formed of the working cutting wire 25 is provided in the cutting chamber 1, and the wire network needs to be introduced into the cutting chamber 1 through the steering wheel 235. In the prior art, the steering wheel 235 is arranged inside the cutting chamber 1. Due to the presence of cutting liquid and silicon powder in the cutting chamber 1, it is easy to damage the steering wheel 235 and the cutting wire 25 on it, and it is also easy to cause unstable operation of the steering wheel 235. The present disclosure changes the overall structural layout by placing the steering wheel 235 inside the protective chamber 3. After working in the cutting chamber 1 for a period of time, the cutting wire 25 needs to be cooled and lubricated. At this time, the cutting liquid is injected into the cutting chamber 1. After cooling the cutting wire 25, a majority of the cutting liquid moves toward the bottom of the cutting chamber 1 and is discharged from the main drainage pipeline. Another part of the cutting liquid flows onto the steering wheel 235 along the cutting wire 25 and enters the protective chamber 3, then falls onto the water blocking tray 34 inside the protective chamber 3. Since the gas-liquid inlet 31 is set at the bottom of the protective chamber 3 and is connected to the water blocking tray 34, the cutting liquid falling onto the water blocking tray 34 will flow into the gas-liquid inlet 31 along the water blocking tray 34, and then into the auxiliary drainage pipeline 32 connected to the gas-liquid inlet 31; finally, it enters the main drainage pipeline along the auxiliary drainage pipeline 32 and is eventually discharged from the main drainage pipeline. Moreover, in addition to the cutting liquid, some powder or dust will stay in the cutting chamber 1 after a period of cutting work. For example, silicon powder and the like will be generated when the cutting wire 25 cuts crystalline silicon. Taking silicon powder as an example for description, in order to avoid affecting the working of the cutting wire 25 and also avoiding the wear of cutting wire 25 under the action of silicon powder, the silicon powder needs to be discharged outside the cutting chamber 1. In addition to that some silicon powder is discharged through the main exhaust pipeline, a part of the silicon powder in the cutting chamber 1 overflows along the cutting wire 25 and through the holes on the wire passing bracket 230, and enters the protective chamber 3, or enters the protective chamber 3 together with the cutting liquid. The silicon powder entering the protective chamber 3 also needs to be discharged outside the protective chamber 3 to avoid affecting the working of the cutting wire 25 inside the protective chamber 3 and even damaging the cutting wire 25. The auxiliary exhaust pipeline 33 is connected inside the protective chamber 3. The silicon powder in the protective chamber 3 is sucked away by the auxiliary exhaust pipeline 33 and then discharged into the main exhaust pipeline, and then discharged outside the slicer through a vacuum pump. It should be noted that the interior of the cutting chamber 1 and the interior of the protective chamber 3 are set to a negative pressure state, so that the silicon powder in the cutting chamber 1 and the protective chamber 3 can be prevented from leaking to the outside of the slicer to endanger the health of workers and environmental safety.

In addition, since the liquid flows downward and the silicon powder is generally suspended in the air, the auxiliary drainage pipeline 32 is arranged below the main drainage pipeline, that is, the inlet of the auxiliary drainage pipeline 32 is arranged below the inlet of the auxiliary exhaust pipeline 33, so that the liquid in the protective chamber 3 flows downward to a lower position and is discharged, while the silicon powder is discharged from the auxiliary exhaust pipeline 33 higher than the auxiliary drainage pipeline 32. If the auxiliary exhaust pipeline 33 is arranged lower than the auxiliary drainage pipeline 32, the liquid will be discharged from the auxiliary drainage pipeline 32 at a higher position. Due to the suspended state of silicon powder, some of the silicon powder will preferentially enter the auxiliary drainage pipeline 32 at a higher position. At this time, the auxiliary drainage pipeline 32 contains both a part of the silicon powder and the cutting liquid. Since the auxiliary drainage pipeline 32 is connected to a pump device, it is very easy to cause the pump device to idle when most of the silicon powder is carried in the auxiliary drainage pipeline 32, thus reducing the service life of the pump device. This also applies to the situation of arranging the auxiliary exhaust pipeline 33 at a lower position. Based on this, the inlet of the auxiliary drainage pipeline 32 is arranged below the inlet of the auxiliary exhaust pipeline 33. In addition, setting the diameter of the auxiliary drainage pipeline 32 to be smaller than that of the auxiliary exhaust pipeline 33 can also reduce the possibility of idling of the pump device connected to the auxiliary drainage pipeline 32, while also reducing the space occupied by the auxiliary drainage pipeline 32 and saving materials and costs.

In addition, since the liquid flows toward a lower position under the action of gravity, arranging the main drainage pipeline to be lower than the auxiliary drainage pipeline 32 is more advantageous for the collection of liquid in the auxiliary drainage pipeline 32 toward the main drainage pipeline. The powdered silicon powder is suspended in the air and is more likely to move upward. Therefore, arranging the main exhaust pipeline to be higher than the auxiliary exhaust pipeline 33 is more advantageous for the collection of powder in the auxiliary exhaust pipeline 33 toward the main exhaust pipeline.

It should be noted that when there is no need to recycle the liquid in the main drainage pipeline, the liquid in the main drainage pipeline is discharged outside the slicer. If secondary utilization of the liquid in the main drainage pipeline is desired, the second end of the main drainage pipeline can be communicated with the liquid supply cylinder for recycling.

In summary, in the present disclosure, the entire routing mechanism 20 is arranged inside the main frame A, that is, the unwinding roller 21, the guide assembly 24, the tension assembly 22, and the steering assembly 23 are all arranged inside the main frame A, avoiding the inconvenience caused by passing the wire and improving work efficiency. In the present disclosure, the rotation of the rotating shaft 213 drives the wiring wheel 211 to rotate instead of through the housing 212, thus reducing the radius of rotation. By using the rotation of the rotating shaft 213 and the inner ring 2141 of the bearing 214 to drive the wiring wheel 211 to rotate, the rotational inertia of the routing wheel set 210 can be reduced, and its operational resistance can be reduced, thereby improving the working efficiency of the routing wheel set 210. The shaft end baffle 2135 is connected to the installation hole 2134 through a threaded connector, so that the inner ring 2141 of the bearing 214 is fixedly connected to the rotating shaft 213, enabling the rotating shaft 213 and the inner ring 2141 of the bearing 214 to rotate synchronously. The protruding circular ring 2121 abuts against the second side 2142b of the outer ring 2142 of the bearing 214 to fix the outer ring 2142 of the bearing 214 inside the housing 212. The rotating shaft 213 and the inner ring 2141 of the bearing 214 rotate synchronously inside the housing 212. At the same time, the rotating shaft 213 drives the wiring wheel 211 to rotate. The housing 212 is fixedly connected to the outer ring 2142 of the bearing 214 to support and protect the rotating shaft 213 and the inner ring 2141 of the bearing 214.

Since the steering assembly 23 can guide the cutting wire 25 into the cutting chamber 1, it has to include a structure that can adjust its direction. The steering assembly 23 includes the slide rail 2381 and the slider 2382. The slider 2382 can slide in the length direction of the slide rail 2381 (the y-direction). The fixing bracket 236 of the steering assembly 23 is arranged on the slider 2382, and the steering wheel 235 is rotatably arranged on the fixing bracket 236, which can ensure that the steering wheel 235 can rotate while also moving in the length direction of the slide rail 2381. Therefore, the position of the steering wheel 235 can be adjusted according to the requirement of the position at which the cutting wire 25 enters the cutting chamber 1. In order to ensure the accuracy of the position at which the cutting wire 25 enters the cutting chamber 1, the wire passing bracket 230 is also provided on the fixing bracket 236. After passing through the steering wheel 235, the cutting wire 25 passes through the wire passing groove 234 of the fixing main frame 2311, the bearing part 232 and the stopper part 233 of the wire passing bracket 230, and then is wound around the cutting mechanism 11. In order to reduce the entry of cutting liquid from the cutting chamber 1 into the protective chamber 3, the shielding edge 12 is provided on the isolation door 13. The shielding edge 12 is arranged inside the cutting chamber 1. If the shielding edge 12 is provided in a case where there is no wire passing bracket 230, the shielding edge 12 will hinder the cutting wire 25 from entering the cutting chamber 1, and the cutting wire 25 will also cut the shielding edge 12. The arrangement of the wire passing bracket 230 avoids the above problem.

The steering wheel 235 is arranged inside the protective chamber 3. After working in the cutting chamber 1 for a period of time, the cutting wire 25 needs to be cooled and lubricated. At this time, the cutting liquid is injected into the cutting chamber 1. A part of the cutting liquid flows onto the steering wheel 235 along the cutting wire 25 and enters the protective chamber 3, then falls onto the water blocking tray 34 inside the protective chamber 3. Since the gas-liquid inlet 31 is set at the bottom of the protective chamber 3 and is connected to the water blocking tray 34, the cutting liquid falling onto the water blocking tray 34 will flow into the gas-liquid inlet 31 along the water blocking tray 34, and then into the auxiliary drainage pipeline 32 connected to the gas-liquid inlet 31; finally, it enters the main drainage pipeline along the auxiliary drainage pipeline 32 and is eventually discharged from the main drainage pipeline. Moreover, in addition to the cutting liquid, some silicon powder generated when the cutting wire 25 cuts crystalline silicon will stay in the cutting chamber 1. A part of the silicon powder overflows along the holes on the cutting wire 25, and enters the protective chamber 3, or enters the protective chamber 3 together with the cutting liquid. In order to avoid affecting the working of the cutting wire 25 inside the protective chamber 3, the auxiliary exhaust pipeline 33 is connected inside the protective chamber 3. The silicon powder is sucked away by the auxiliary exhaust pipeline 33 and then discharged into the main exhaust pipeline, and then discharged outside the slicer.

Referring to FIGS. 12 to 14, another preferred embodiment of the steering wheel of the present application will be introduced. In another preferred embodiment, the steering wheel 100 includes an installation sleeve 101, a rotating shaft 102, a wheel body 103, and a pipe joint 104. The installation sleeve 101 is in the shape of a cylinder, with an air inlet hole 1011 provided on its outer circumference surface. The rotating shaft 102 is rotatably arranged inside the installation sleeve 101, and one end of the rotating shaft 102 extends out of the installation sleeve 101 (the left end shown in FIG. 14). The wheel body 103 is connected to the end of the rotating shaft 102 that extends out of the installation sleeve 101. One end of the pipe joint 104 is connected to the air inlet hole 1011, and the other end can be connected to an air pipe. The pipe joint 104 is used to guide the external airflow inside the air pipe to the interior of the installation sleeve 101 before the airflow flows out through a gap between the installation sleeve 101 and the rotating shaft 102. After installation, an air path and gap are defined between the installation sleeve 101 and the rotating shaft 102. One end of the gap is communicated with the surrounding environment, and the other end is communicated with the pipe joint 104 through the air path. During the application process, the cutting wire passes through a groove on the wheel body 103. During the cutting process, the cutting wire moves back and forth, driving the wheel body 103 to rotate back and forth. During the rotation of the wheel body 103, it drives the rotating shaft 102 to rotate together. At the same time, the airflow inside the air pipe enters the installation sleeve 101 through the pipe joint 104 and the air inlet hole 1011, and flows out from the gap between the installation sleeve 101 and the rotating shaft 102 after passing through the air path.

By providing the air inlet hole 1011 on the installation sleeve 101 and installing the pipe joint 104 on the air inlet hole 1011, the airflow inside the air pipe can be used to achieve an air sealing effect inside the installation sleeve 101. The airflow flows out from the annular gap between the installation sleeve 101 and the rotating shaft 102, forming an annular airflow barrier which prevents the powder from accumulating at the joint between the installation sleeve 101 and the rotating shaft 102, thereby improving the rotational stability of the steering wheel 100.

As shown in FIGS. 12 to 15, in a preferred embodiment, the steering wheel 100 includes the installation sleeve 101, the rotating shaft 102, the wheel body 103, the pipe joint 104, a bearing 105, a limiting member 106, an outer gland 107, an inner gland 108, a locking member 109, an installation seat 14, and a cover plate 18.

Specifically, the installation sleeve 101 is a cylinder with both ends open, and its first end (the left end shown in FIG. 14) is formed with the air inlet hole 1011, a second sealing structure 1012, and a first positioning structure 1013. Preferably, the air inlet hole 1011 is radially provided on the outer circumference surface at the first end, and an internal thread may be provided in the air inlet hole 1011 for engagement with the thread at the pipe joint 104. The second sealing structure 1012 is arranged on the end face at the first end of the installation sleeve 101; as shown in FIG. 15, it specifically includes a second annular protrusion 10121, a third annular protrusion 10122, and a third annular groove 10123 formed between the second annular protrusion 10121 and the third annular protrusion 10122. The second annular protrusion 10121 and the third annular protrusion 10122 are arranged concentrically from the outside to the inside along the radial direction of the end face of the installation sleeve 101, and the third annular groove 10123 is formed between the two. The first positioning structure 1013 is an annular reduced diameter platform formed on a cylindrical inner wall of the first end of the installation sleeve 101, extending radially inward and protruding from the cylindrical inner wall.

The rotating shaft 102 includes a shaft neck section 1021, a shaft body section 1022, and a shaft head section 1023 connected in sequence. The shaft neck section 1021 is inserted into the installation sleeve 101 from the first end of the installation sleeve 101, the shaft head section 1023 extends out of the installation sleeve 101, and the shaft body section 1022 is partially located outside the installation sleeve 101 and partially extends to the first positioning structure 1013. The shaft body section 1022 of the rotating shaft 102 extends radially outward to form a convex ring 10221. A first sealing structure 10222 is formed on the side of the convex ring 10221 that faces the first end of the installation sleeve 101. The first sealing structure 10222 is matched and docked with the second sealing structure 1012 at the first end of the installation sleeve 101. Preferably, referring to FIG. 15, the first sealing structure 10222 includes a first annular groove 102221, a second annular groove 102222, and a first annular protrusion 102223 formed between the first annular groove 102221 and the second annular groove 102222, which are arranged on the convex ring 10221. The first annular groove 102221 and the second annular groove 102222 are arranged concentrically from the outside to the inside along the radial direction of the convex ring 10221, and the first annular protrusion 102223 is formed between the two. When assembled, the first annular groove 102221 and the second annular groove 102222 are matched and docked with the second annular protrusion 10121 and the third annular protrusion 10122 respectively, and the first annular protrusion 102223 is matched and docked with the third annular groove 10123. In this way, a curved sealing path is formed between the convex ring 10221 and the end face at the first end of the installation sleeve 101. There is a gap between the first sealing structure 10222 and the second sealing structure 1012, through which the airflow flows out. In use, on one hand, the curved path of the gap itself constitutes a circuit sealing structure, which can prevent dust from easily reaching the interior of the installation sleeve 101; on the other hand, the annular airflow flowing out of the gap can expel nearby dust and prevent it from approaching the joint positions, thereby effectively preventing dust accumulation which would affect the rotation.

The wheel body 103 is sleeved onto the shaft body section 1022 and does not rotate relative to the shaft body section 1022. For example, the wheel body 103 is sleeved onto the shaft body section 1022 through flat keys, plum blossom keys, etc. The shaft head section 1023 is provided with the locking member 109, which presses against the wheel body 103. In the present application, the locking member 109 is a nut, and two nuts are provided. The shaft head section 1023 is provided with an external thread, and the two nuts are sequentially screwed and fastened onto the external thread of the shaft head section 1023 to fasten the wheel body 103 to the shaft head section 1023. The bearing 105 can be a rolling ball bearing 105, and two rolling ball bearings 105 are provided, which are installed between the shaft neck section 1021 and the installation sleeve 101. The inner ring of the bearing 105 is installed on the shaft neck section 1021, and the outer ring of the bearing 105 is embedded onto the installation sleeve 101. The limiting member 106 is preferably a bearing ring, and two bearing rings are provided, which are sleeved onto the rotating shaft 102 side by side and located between the two bearings 105. The so-called bearing ring in the present application refers to the assembly of the bearing 105 after removing the rolling elements between the inner and outer rings, and it includes an inner ring and an outer ring. The bearing ring can be provided by the manufacturer of the bearing 105 together with the bearing 105, or the old bearing 105 with damaged rolling elements can be reused, which has the advantages of convenient acquisition and low cost.

The outer gland 107 is connected to one end of the installation sleeve 101 that is away from the wheel body 103 (the right end shown in FIG. 14). In the present application, a through hole is provided on the outer gland 107, and a threaded hole is formed at a position of the end of the installation sleeve 101 that corresponds to the through hole. The outer gland 107 is fastened and connected to the installation sleeve 101 by bolts. A second positioning structure 1071 is also formed on an inner side surface of the outer gland 107. In the connected state of the outer gland 107, the second positioning structure 1071 presses against the outer ring of the bearing 105. Preferably, the second positioning structure 1071 is an annular protrusion. The inner gland 108 is connected to the end of the shaft neck section 1021 and presses against the inner ring of the bearing 105. Preferably, the inner gland 108 is formed with a through hole, and the end of the shaft neck section 1021 is provided with a threaded hole along the axial direction. The screw passes through the through hole and is screwed into the threaded hole to fixedly connect the inner gland 108 to the end of the shaft neck section 1021.

Referring to FIG. 14, in the installed state, the two bearings 105 are installed at both ends of the shaft neck section 1021, and the two bearing rings are arranged side by side between the two bearings 105, so that the outer rings of the bearing rings are located between the two outer rings of the two bearings 105 and are stationary relative to them, and the inner rings of the bearing rings are located between the two inner rings of the two bearings 105 and are stationary relative to them. Therefore, during the rotation process, there is no relative motion between the bearing rings and the bearings 105. The inner ring of the bearing 105 located at one end (the left end in FIG. 14) is pressed against a shaft shoulder formed between the shaft neck section 1021 and the shaft body section 1022, and the outer ring thereof is pressed against the annular reduced diameter platform. The inner ring of the bearing 105 located at the other end (the right end in FIG. 14) is pressed against the inner gland 108, and the outer ring thereof is pressed against the annular protrusion of the outer gland 107. Thus, the two bearings 105 and the two bearing rings are completely positioned in the axial direction. As shown in FIG. 14, the air inlet hole 1011 is located between the first end of the installation sleeve 101 and the leftmost bearing 105, and it extends radially through the wall of the installation sleeve 101. Due to the small size of the air inlet hole 1011, it will not affect the limiting effect of the installation sleeve 101 on the outer ring of the bearing 105. The pipe joint 104 can be an elbow, with one end of the elbow connected to the air inlet hole 1011 and the other end extending away from the wheel body 103. Specifically, the pipe joint 104 is provided with an external thread, and the pipe joint 104 is fixedly screwed to the internal thread of the air inlet hole 1011.

As shown in FIG. 13, the installation seat 14 is in a plate shape as a whole, and the installation sleeve 101 is fixedly connected to the installation seat 14. For example, a threaded column is formed on the outer side of the outer gland 107, and a through hole is provided on the installation seat 14. The threaded column passes through the through hole and is then fixedly screwed with a nut, thereby fixedly connecting the installation sleeve 101 to the installation seat 14. As shown in FIG. 12, the cover plate 18 includes a plate body and an outer folded edge formed by bending one side of the plate body twice. A U-shaped notch is formed on the outer folded edge, and a through hole is formed on the installation seat 14. A bolt passes through the through hole and notch and is then screwed with a nut to fixedly connect the cover plate 18 to the installation seat 14. After installation, cover plate 18 covers one side of wheel body 103.

By using an elbow as the pipe joint 104, the space occupation of the pipe joint 104 can be effectively reduced, and the installation difficulty can be lowered. By matching and docking the first sealing structure 10222 with the second sealing structure 1012, the air sealing effect can be improved while also physically blocking the powder from entering the rotating shaft 102, thereby enhancing the sealing effect. By arranging the bearings 105, the rotational stability of the rotating shaft 102 can be improved. By separating multiple bearings 105 through the limiting members 106, the stability of supporting the rotating shaft 102 can be improved and the rotational runout of the rotating shaft 102 can be reduced. The air inlet hole 1011 is arranged between the end face of the wheel body 103 and the bearing 105, which can improve the air sealing effect and reduce airflow loss. By arranging the outer gland 107, the outer ring of the bearing 105 on the right side in FIG. 14 can be limited to reduce axial displacement. By arranging the first positioning structure 1013, the outer ring of the bearing 105 on the left side in FIG. 14 can be limited to reduce axial displacement. By arranging the inner gland 108, the inner ring of the bearing 105 can be limited to reduce axial displacement. By arranging the shoulder, the inner ring of bearing 105 on the left side in FIG. 14 can be limited to reduce axial displacement. By arranging the cover plate 18, the accumulation of powder on the wheel body 103 can be blocked, improving the working stability of the steering wheel 100.

In an alternative embodiment, although the pipe joint 104 is described by taking the elbow as an example in the above embodiment, the specific arrangement of the pipe joint 104 is not unique and can be adjusted by those skilled in the art. For example, the pipe joint 104 can also be a straight pipe joint 104, etc. For another example, the pipe joint 104 can be connected to the air inlet hole 1011 by welding, riveting, bonding and other methods in addition to screwing. Of course, the pipe joint 104 can also be omitted, and the air pipe can be directly connected to the air inlet hole 1011. In another alternative embodiment, the position of the air inlet hole 1011 can be adjusted by those skilled in the art, as long as the adjusted technical solution can achieve air sealing through the airflow entering from the air inlet hole 1011. In another alternative embodiment, the arrangement of the first sealing structure 10222 and the second sealing structure 1012 is not invariable, and can be adjusted by those skilled in the art. For example, the convex ring 10221 and the first sealing structure 10222 can be omitted, or the number and arrangement order of the grooves and protrusions in the first sealing structure 10222 can be changed. Correspondingly, the second sealing structure 1012 can be omitted, or the number and arrangement order of the protrusions and grooves in the second sealing structure 1012 can also be changed. In another alternative embodiment, although the above embodiment is described using an example in which the bearings 105 are provided, the arrangement of the bearings 105 is not necessary. Those skilled in the art can determine whether to arrange them and determine the specific forms of the bearings 105 according to their needs. For example, in a case where the contact surfaces between the installation sleeve 101 and the rotating shaft 102 are sufficiently smooth, the bearing 105 can be omitted. For another example, the bearing 105 can also be replaced with a metal shaft sleeve. In an alternative embodiment, although the above embodiment is described using an example in which the limiting member 106 is a bearing ring, the specific form of the limiting member 106 is not unique, and those skilled in the art can adjust it as long as it can play a role in limiting the bearing 105. For example, the limiting member 106 may be omitted, or the limiting member 106 may also be a sleeve, which is sleeved on the rotating shaft 102; or the limiting member 106 can be a collar, and multiple collars are provided, which are arranged side by side on the rotating shaft 102. Using a sleeve as the limiting member 106 has a simple structure, good effect, and low difficulty in assembly and disassembly. Using a collar as the limiting member 106 has good adaptability. In another alternative embodiment, although the above embodiment is described using an example in which two bearings 105 and two limiting members 106 are provided, the specific numbers of the bearings 105 and limiting members 106 are not limited, and those skilled in the art can adjust them according to specific application scenarios. For example, the number of the bearings 105 can be one, three, four, or more. For another example, the number of the limiting members 106 can be one, three, or more. In another alternative embodiment, the specific structure of the rotating shaft 102 is not invariable. In addition to the aforementioned shaft neck section 1021, shaft body section 1022, and shaft head section 1023, those skilled in the art can add or delete the structure of the rotating shaft 102 according to their needs. Of course, after adjusting the structure of the rotating shaft 102, the arrangement positions of the wheel body 103 and the bearing 105 can also be adjusted accordingly. In another alternative embodiment, although the above embodiment is described using an example in which the outer gland 107 is provided, whether the outer gland 107 is provided depends on the specific needs of those skilled in the art. In addition, the second positioning structure 1071 on the outer gland 107 can also be omitted or replaced with other structures; for example, the second positioning structure 1071 may be provided as multiple arc-shaped protrusions that are spaced apart. In another alternative embodiment, the specific structural form of the inner gland 108 is not limited in the present application. The inner gland 108 may be omitted, or may be provided as other structures. For example, in a case where a threaded shaft is provided outside the shaft neck section 1021, the inner gland 108 can be replaced with a nut, or a threaded hole can be directly formed in the middle of the inner gland 108, an external thread can be formed at the end of the shaft neck section 1021, and the inner gland 108 is screwed and fastened to the end of the shaft neck section 1021. In another alternative embodiment, the form of the first positioning structure 1013 is not limited to the annular reduced diameter platform, and those skilled in the art can adjust it, as long as it can limit the outer ring of the bearing 105. For example, the first positioning structure 1013 can also be multiple arc-shaped protruding blocks spaced apart along an inner circumference surface of the installation sleeve 101. In another alternative embodiment, although the locking member 109 mentioned above is described by using a nut as an example, the specific structure and number of the locking member 109 are not unique. In other embodiments, the locking member 109 can also be a locking retainer ring, and the shaft head section 1023 is provided with a threaded hole in a circumferential direction. A screw passes through the locking retainer ring and is screwed into the threaded hole. For another example, in a case where the locking member 109 is a nut, the number of the locking member 109 can also be set to only one. In another alternative embodiment, although the above embodiment is described in an example in which the installation seat 14 and the cover plate 18 are provided, the installation seat 14 and the cover plate 18 are not necessary. Those skilled in the art can choose whether to provide them and determine their specific structural shapes and installation methods based on specific application scenarios.

Next, another embodiment of the steering assembly of the present application will be described with reference to FIGS. 16 and 17. In another embodiment, the steering assembly 10 includes a slide rail 11, a slider 12, an adjustment plate 13, an installation seat 14, and a steering wheel 15. Two ends of the slide rail 11 are fixed at preset installation positions, and the slider 12 is slidably arranged on the slide rail 11. The adjustment plate 13 is pivotally connected to the slider 12, the installation seat 14 is connected to the adjustment plate 13, and the steering wheel 15 is rotatably installed on the installation seat 14. During the application process, the cutting wire passes through a wire groove on the steering wheel 15, and after being steered by the steering wheel 15, it is wound around the main roller assembly to form a wire network. During the cutting process, the cutting wire moves back and forth, driving the steering wheel 15 to rotate back and forth. After the spacing, diameter and the like of the main roller are adjusted, or after the wire network changes due to changes in the length of the workpiece-to-be-cut, the incoming and outgoing directions of the cutting wire will change. At this time, the position of the slider 12 on the slide rail 11 and the angle of the adjustment plate 13 relative to the slider 12 are adjusted to adjust the positions of the cutting wire entering and exiting the main roller, so that the cutting wire and the main roller meet a preset position relationship; preferably, the cutting wire is tangent to the axis of the main roller. The adjustment plate 13 is pivotally connected to the slider 12, so that the steering wheel 15 can achieve translational adjustment and angle adjustment, facilitating the adjustment of the incoming and outgoing route of the cutting wire to be tangent to the main roller, and improving the accuracy of cutting wire adjustment.

As shown in FIGS. 16 to 19, in a preferred embodiment, the steering assembly 10 includes a slide rail 11, a slider 12, an adjustment plate 13, an installation seat 14, a steering wheel 15, a flange assembly 16, a position adjustment assembly 17, a cover plate 18, and a wire passing bracket 19. As shown in FIG. 18, the cross section of the slide rail 11 can be diamond shaped, and the slider 12 is provided with a through hole. An upper side of the through hole has an inner surface that matches the diamond shaped cross section of the slide rail 11. The slider 12 is arranged on the slide rail 11 through the through hole and can move along the slide rail 11. As shown in FIG. 18, the adjustment plate 13 includes a horizontal plate 131 and a vertical plate 132 connected to each other, which can be formed as a whole, or formed separately and then connected together. One end of the horizontal plate 131 is rotatably connected to a top surface of the slider 12, and the other end of the horizontal plate 131 is connected to one end of the vertical plate 132; the other end of the vertical plate 132 is connected to the installation seat 14. Specifically, the horizontal plate 131 is provided with a first through hole (not shown) and a first arc-shaped hole 1311. The top of the slider 12 is provided with a first connection hole and a second connection hole (both not shown). A first connector 121 is connected to the first connection hole after passing through the first through hole, and a second connector 122 is connected to the second connection hole after passing through the first arc-shaped hole 1311. Therefore, the horizontal plate 131 can pivot around the first connector 121 under the guidance of the first arc-shaped hole 1311. In the present application, the first connector 121 is a pin shaft, and the second connector 122 is a bolt. In the installed state, the horizontal plate 131 is fixedly connected to the top of the slider 12 by the first connector 121 and the second connector 122. When it is required to adjust the angle of the steering wheel 15, the second connector 122 is unscrewed and the first connector 121 is used as a rotational axis, so that the horizontal plate 131 pivots relative to the slider 12 in the horizontal plane under the guidance of the first arc-shaped hole 1311. After pivoting in place, the second connector 122 is tightened again to fix the horizontal plate 131 to the top of the slider 12 again.

As shown in FIG. 18, the vertical plate 132 is provided with a second through hole (not shown) and a second arc-shaped hole 1321. The installation seat 14 is connected to the vertical plate 132 and can pivot relative to the vertical plate 132 in a vertical plane. Specifically, the installation seat 14 is provided with a third connection hole and a fourth connection hole (both not shown). The second through hole is connected to the third connection hole through a third connector 133, and the second arc-shaped hole 1321 is connected to the fourth connection hole through a fourth connector 134. Therefore, the installation seat 14 can pivot around the third connector 133 under the guidance of the second arc-shaped hole 1321. Preferably, the third connector 133 is a pin shaft, and the fourth connector 134 is a bolt and nut assembly. In the installed state, the installation seat 14 is fixed connected one end of the vertical plate 132 by the third connector 133 and the fourth connector 134. When it is required to adjust the angle of the steering wheel 15, the fourth connector 134 is unscrewed and the third connector 133 is used as a rotational axis, so that the installation seat 14 pivots relative to the vertical plate 132 in the vertical plane under the guidance of the second arc-shaped hole 1321. After pivoting in place, the fourth connector 134 is tightened again to fix the installation seat 14 on the vertical plate 132 again.

The adjustment plate 13 can pivot in the horizontal plane, so that the angle of the steering wheel 15 along the horizontal plane can be adjusted, which facilitates the adjustment of the routing of the cutting wire. By providing the first through hole and the first arc-shaped hole 1311, the horizontal plate 131 can pivot by using the first connector 121 connected in the first through hole as the axis. During the pivoting process, the first arc-shaped hole 1311 is used to guide the pivoting, and after the pivoting is completed, the first connector 121 and the second connector 122 can achieve dual fastening, which improves the pivoting accuracy and connection stability. The installation seat 14 is pivotally connected to the vertical plate 132, so that the angle of the steering wheel 15 along the vertical plane can be further adjusted, achieving dual angle adjustment and further improving the adjustment accuracy of routing of the cutting wire. By providing the second through hole and the second arc-shaped hole 1321, the installation seat 14 can pivot in the vertical plane by using the third connector 133 connected in the second through hole as the axis. During the pivoting process, the second arc-shaped hole 1321 is used to guide the pivoting, and after the pivoting is completed, the third connector 133 and the fourth connector 134 can achieve dual fastening, which improves the pivoting accuracy and connection stability.

Referring to FIGS. 18 and 19, two fixing flange assemblies 16 are provided, each of which includes an upper flange 161 and a lower flange 162 connected to each other. A lower part of the upper flange 161 is provided with a first notch 1611, and an upper part of the lower flange 162 is provided with a second notch 1621. The upper flange 161 is fixedly connected to the lower flange 162, and the first notch 1611 and the second notch 1621 enclose to form a perforation that matches the cross section of the slide rail 11. Two ends of the slide rail 11 are respectively connected to one of the fixing flange assemblies 16. In the present application, two through holes are provided on an upper side edge of the upper flange 161, and two threaded holes are provided on an upper side edge of the lower flange 162. Screws pass through the through holes of the upper flange 161 and are screwed into the threaded holes of the lower flange 162 to achieve a fixed connection between the upper flange 161 and the lower flange 162. The position adjustment assembly 17 includes an adjustment bracket 171, which is provided with a fifth connection hole. The fixing flange assembly 16 is provided with a long strip shaped hole 1612, and a fifth connector 172 is connected to the fifth connection hole by passing through the long strip shaped hole 1612, so that the fixing flange assembly 16 is movably connected to the position adjustment assembly 17. Specifically, the adjustment bracket 171 is an L-shaped plate. As shown in FIG. 18, the L-shaped plate includes a first plate section 1711 and a second plate section 1712. The first plate section 1711 is provided with two fifth connection holes, which are threaded holes. The upper flange 16 is provided with two long strip shaped holes 1612, which are arranged along the extension direction of the first plate section 1711. The fifth connector 172 is a screw, which passes through the long strip shaped hole 1612 and is screwed into the fifth connection hole to fix the flange assembly 16 and the adjustment bracket 171. The second plate section 1712 is provided with two adjustment holes, which are arranged in the vertical direction. The adjustment hole located above is a threaded hole, and the adjustment hole located below is a through hole. The position adjustment assembly 17 also includes an adjustment member 173, which is connected to the fixing flange assembly 16 through the adjustment hole and used to adjust the movement of the fixing flange assembly 16 toward or away from the second plate section 1712. Specifically, taking the direction shown in FIG. 19 as an example, two adjustment members 173 are provided correspondingly, i.e., a first screw and a second screw. The first screw is screwed into the upper first adjustment hole with internal threads and passes through the first adjustment hole to abut against the side surface of the upper flange 161. After the second screw passes through the lower second adjustment hole with no threads, its end is screwed into the threaded hole provided on the side surface of the lower flange 162.

When it is required to adjust the overall position of the slide rail 11, the fifth connector 172 is unscrewed first, and then the two adjustment members 173 are adjusted to achieve the position of the fixing flange assembly 16 relative to the adjustment bracket 171. For example, the upper first screw is tightened, the lower second screw is unscrewed at the same time, and the upper first screw pushes the fixing flange assembly 16 away from the second plate section 1712; conversely, the upper first screw is unscrewed, the lower second screw is tightened at the same time, and the lower second screw pulls the fixing flange assembly 16 close to the second plate section 1712. After adjustment is completed, the two fifth connectors 172 are screwed to fix the fixing flange assembly 16 again. Providing the fixing flange assembly 16 is advantageous for fixing the slide rail 11 and improving the connection stability of the slide rail 11. The perforation enclosed by the upper flange 161 and the lower flange 162 can provide positioning and supporting for the slide rail 11, improving the positioning accuracy and connection stability of the slide rail 11. By providing the position adjustment assembly 17, it is possible to achieve the movement of the fixing flange assembly 16, thereby increasing the translational adjustment of the slide rail 11 and further facilitating the adjustment of routing of the cutting wire. By providing the long strip shaped hole 1612, it is possible to achieve a fastened connection between the fixing flange assembly 16 and the adjustment bracket 171, while also guiding the adjustment of the fixing flange assembly 16 through the long strip shaped hole 1612, thereby improving the adjustment accuracy. By providing the adjustment member 173, the position of the fixing flange can be adjusted through the adjustment member 173, reducing the difficulty of adjustment and improving the accuracy of adjustment.

Referring to FIGS. 16 and 18, the cover plate 18 includes a plate body and an outer folded edge formed by bending one side of the plate body twice. A U-shaped notch is formed on the outer folded edge, and a through hole is formed on the installation seat 14. After a bolt passes through the through hole and notch, it is screwed with a nut to fixedly connect the cover plate 18 to the installation seat 14. After installation, the cover plate 18 covers one side of the wheel body. By providing the cover plate 18, the steering wheel 15 can be protected, preventing the accumulation of cutting powder on the wheel body, and improving the working stability of the steering wheel 15. The wire passing bracket 19 is fixedly connected to the installation seat 14, and is provided with a wire passing groove. The extension direction of the wire passing groove is tangent to the outer edge of the steering wheel 15. After being guided by the wire passing groove of the wire passing bracket 19, the cutting wire passes through the groove of the steering wheel 15 in the tangential direction of the steering wheel 15. The arrangement of the wire passing bracket 19 is advantageous for guiding the cutting wire and improving the wire passing accuracy of the cutting wire.

Although the above embodiment is described using an example in which the slide rail 11 has a diamond shaped cross section, the specific cross-sectional shape of the slide rail 11 is not limited and can be adjusted by those skilled in the art. For example, the cross-sectional shape of the slide rail 11 can also be rectangular, circular, elliptical, etc. In an alternative embodiment, although the above embodiment is described using an example in which the adjustment plate 13 pivots relative to the slider 12 in the horizontal plane, this is only a preferred embodiment. In other embodiments, when the upper surface of the slider 12 is in a non-horizontal state after installation, the pivoting direction of the adjustment plate 13 can also be at a certain angle to the horizontal plane. In another alternative embodiment, although the adjustment plate 13 mentioned above is described using an example in which it includes the horizontal plate 131 and the vertical plate 132, this is only a preferred embodiment, and those skilled in the art can adjust it according to specific application scenarios. For example, the adjustment plate 13 may include only the horizontal plate 131 or only the vertical plate 132, or other plate-shaped structures can be added on this basis. In another alternative embodiment, although the above embodiment is described using an example in which the first connector 121 and the second connector 122 fix the horizontal plate 131 on the slider 12, the fixing method of the horizontal plate 131 is not unique, and those skilled in the art can adjust it. For example, only the first through-hole is provided on the horizontal plate 131, and the pivoting of the horizontal plate 131 can be achieved when the first connector 121 is loosened. For another example, the first arc-shaped hole 1311 can also be replaced with multiple through holes arranged in an arc shape. In another alternative embodiment, although the above embodiment is described using an example in which the installation seat 14 is pivotally connected to the vertical plate 132, the arrangement of the installation seat 14 is not invariable, and those skilled in the art can adjust it based on specific application scenarios. For example, the installation seat 14 can also be fixedly connected to the vertical plate 132, but of course this will not be advantageous for improving the adjustment accuracy of the cutting wire. Alternatively, only the second through hole is provided on the vertical plate 132, and the pivoting of the installation seat 14 can be achieved when the third connector 133 is loosened. For another example, the second arc-shaped hole 1321 can be replaced with multiple through holes arranged in an arc shape. In an alternative embodiment, although the above embodiment is described using an example in which the installation seat 14 pivots in the vertical plane, this is only a preferred embodiment. In other embodiments, when the vertical plate is not strictly set in the vertical direction after installation, the pivoting direction of the installation seat can also be at a certain angle to the vertical plane. In another alternative embodiment, although the slide rail 11 is fixed in the fixing flange assembly 16 in the above embodiment, the arrangement of the fixing flange assembly 16 is not unique. For example, the fixing flange assembly 16 can be omitted, and the slide rail 11 is directly fixed and connected to the cutting frame, which will of course reduce the installation accuracy of the slide rail 11. For another example, in a case where the fixing flange assembly 16 is provided, the fixing flange assembly 16 may only include a whole flange with a perforation in the middle of the flange. For another example, when the cross-sectional shape of the slide rail 11 changes, the shapes of the first notch 1611 and the second notch 1621 can also be changed correspondingly. For another example, the strip-shaped hole on the upper flange 161 can be adjusted to the lower flange 162, and the strip-shaped hole can also be replaced with multiple through holes. In another alternative embodiment, although the above embodiment is described with the presence of the position adjustment assembly 17, the arrangement of the position adjustment assembly 17 is not necessary. Those skilled in the art can choose whether to provide the position adjustment assembly 17 according to specific application scenarios. Of course, when the position adjustment assembly 17 is not provided, it will not be advantageous for improving the adjustment accuracy of the cutting wire. For another example, in a case where the position adjustment assembly 17 is provided, the specific structure of the position adjustment assembly 17 is not invariable. For example, the adjustment bracket 171 may only include the first plate section 1711, and the second plate section 1712 and the adjustment member 173 are omitted. For another example, the adjustment member 173 can also include only one of the first screw and the second screw. Of course, the arrangements of the first screw and the second screw can also be exchanged. In another alternative embodiment, although the above embodiment is described with the presence of the cover plate 18, the arrangement of the cover plate 18 is not necessary. Those skilled in the art can choose whether to provide it and determine the specific structural shape and installation method of the cover plate 18 based on specific application scenarios. In another alternative embodiment, the arrangement of the wire passing bracket 19 is not necessary, and those skilled in the art can make a choice based on specific application scenarios. When the wire passing bracket 19 is provided, those skilled in the art can make adjustments to the structural shape and connection method of the wire passing bracket 19.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features, and all the technical solutions after these changes or replacements will fall within the scope of protection of the present disclosure.

## Claims

1. A wire cutting machine, **characterized by** comprising a cutting chamber, a protective chamber, a cutting mechanism, and a routing mechanism; wherein the routing mechanism comprises a steering assembly, which is configured to enable a cutting wire to be wound around the cutting mechanism after steering, so that the cutting mechanism can perform cutting work through the cutting wire;
the protective chamber is arranged inside the cutting chamber, and the cutting mechanism is arranged inside the cutting chamber; and
the steering assembly is arranged inside the protective chamber.

2. The wire cutting machine according to claim 1, wherein an isolation door is provided between the cutting chamber and the outer side, and the protective chamber is provided on an inner side of the isolation door; a shielding edge is provided on the inner side of the isolation door, and the shielding edge forms a top cover of the protective chamber.

3. The wire cutting machine according to claim 2, wherein the steering assembly further comprises a fixing bracket, a steering wheel, and a wire passing bracket; the fixing bracket is slidably arranged on the wire cutting machine, the steering wheel is rotatably arranged on the fixing bracket, and the wire passing bracket is fixedly arranged on the fixing bracket; the wire passing bracket has a wire passing groove for guiding the cutting wire to extend from the inner side of the protective chamber to the outer side of the protective chamber.

4. The wire cutting machine according to claim 3, wherein the wire passing bracket is partially arranged between the shielding edge and a steering wheel waterproof assembly, and the wire passing bracket extends from the inner side of the protective chamber to the outer side of the protective chamber.

5. The wire cutting machine according to claim 3, wherein the wire passing bracket comprises:
a fixing part, which is used to fix the wire passing bracket; and
a bearing part, which is connected to the fixing part and bent relative to the fixing part to form a guide inclined surface;
the wire passing groove extends through the fixing part and the bearing part.

6. The wire cutting machine according to claim 5, wherein the wire passing bracket further comprises a stopper part connected to the side of the bearing part that is away from the fixing part, and the wire passing groove passes through the fixing part, the bearing part, and the stopper part.

7. The wire cutting machine according to claim 2, wherein the steering assembly further comprises a slide rail and a slider, the slide rail is fixedly arranged on the wire cutting machine, and the slider is slidably arranged on the slide rail.

8. The wire cutting machine according to claim 7, wherein the steering assembly further comprises:
an adjustment plate, which is pivotally connected to the slider;
an installation seat, which is connected to the adjustment plate; and
a steering wheel, which is rotatably installed on the installation seat.

9. The wire cutting machine according to claim 8, wherein the adjustment plate comprises a horizontal plate and a vertical plate connected to each other; one end of the horizontal plate is pivotally connected to a top surface of the slider, the other end of the horizontal plate is connected to one end of the vertical plate, and the other end of the vertical plate is connected to the installation seat, so that the adjustment plate can pivot relative to the slider in a horizontal plane.

10. The wire cutting machine according to claim 9, wherein the horizontal plate is provided with a first through hole and a first arc-shaped hole, and the top of the slider is provided with a first connection hole and a second connection hole; a first connector passes through the first through hole and is connected to the first connection hole, and a second connector passes through the first arc-shaped hole and is connected to the second connection hole, so that the horizontal plate can pivot around the first connector under the guidance of the first arc-shaped hole.

11. The wire cutting machine according to claim 9, wherein the installation seat is pivotally connected to the vertical plate.

12. The wire cutting machine according to claim 10, wherein the vertical plate is provided with a second through hole and a second arc-shaped hole, and the installation seat is provided with a third connection hole and a fourth connection hole; the second through hole is connected to the third connection hole through a third connector, and the second arc-shaped hole is connected to the fourth connection hole through a fourth connector, so that the installation seat can pivot around the third connector in a vertical plane under the guidance of the second arc-shaped hole.

13. The wire cutting machine according to claim 2, wherein the protective chamber further comprises a side water blocking plate, a steering wheel waterproof assembly, and a water blocking tray; the steering wheel waterproof assembly is arranged below the shielding edge, the side water blocking plate is arranged on the opposite side to the steering wheel waterproof assembly and located below the isolation door, and the water blocking tray is arranged at a position below the side water blocking plate and near the inner side; the isolation door, the shielding edge, the steering wheel waterproof assembly, the water blocking tray, and the side water blocking plate jointly enclose the protective chamber.

14. The wire cutting machine according to claim 3 or 8, wherein the steering wheel comprises:
an installation sleeve, wherein an air inlet hole is provided on an outer circumference surface of the installation sleeve;
a rotating shaft, wherein the rotating shaft is rotatably arranged on the installation sleeve, and one end of the rotating shaft extends out of the installation sleeve; a gap is formed between the installation sleeve and the rotating shaft, and one end of the gap is communicated with the surrounding environment;
a wheel body, which is connected to the end of the rotating shaft that extends out of the installation sleeve; and
an airflow path, which is defined by the installation sleeve and the rotating shaft, and which extends from the air inlet hole to the gap.

15. The wire cutting machine according to claim 14, wherein the steering wheel further comprises:
a pipe joint, wherein one end of the pipe joint is connected to the air inlet hole and the other end of the pipe joint is used to receive an external airflow; the pipe joint is used to guide the airflow into the interior of the installation sleeve before flowing out through the gap between the installation sleeve and the rotating shaft.

16. The wire cutting machine according to claim 14, wherein a shaft body section of the rotating shaft extends radially outward to form a convex ring, and one side of the convex ring is formed with a first sealing structure; an end face of the installation sleeve is formed with a second sealing structure, and the first sealing structure is matched and docked with the second sealing structure.

17. The wire cutting machine according to claim 16, wherein the first sealing structure comprises a first annular groove, a second annular groove, and a first annular protrusion formed between the first annular groove and the second annular groove, which are arranged on the convex ring; the second sealing structure comprises a second annular protrusion, a third annular protrusion, and a third annular groove formed between the second annular protrusion and the third annular protrusion, which are arranged on the end face of the installation sleeve; the first annular groove and the second annular groove are matched and docked with the second annular protrusion and the third annular protrusion respectively, and the first annular protrusion is matched and docked with the third annular groove.
